# EUROPEAN PATENT APPLICATION

(11) **EP 1 344 791 A1**
(43) Date of publication of application: **17.09.2003**
(21) Application number: 03075621.7
(22) Date of filing: 03.03.2003
(51) Int. Cl.: C08K 3/04

(54) **Low noise synthetic resin composition and method**

(30) Priority: 01.03.2002 JP 2002055307; 01.03.2002 JP 2002055308; 07.03.2002 JP 2002062406; 07.03.2002 JP 2002062412; 17.06.2002 JP 2002176436; 18.09.2002 JP 2002272147
(71) Applicant: Minebea Co., Ltd., Nagano-Ken 389-0293 (JP)
(72) Inventor: Hokkirigawa, Kazuo c/o Mineba Co.Ltd., Nagano-Ken 389-0293 (JP); Akiyama, Motoharu c/o Mineba Co.Ltd., Nagano-Ken 389-0293 (JP); Kawamura, Morinobu c/o Mineba Co.Ltd., Nagano-Ken 389-0293 (JP)
(74) Representative: Carpintero Lopez, Francisco

(57) **Abstract**

A low noise composition includes fine particles of RBC or CRBC dispersed in a synthetic resin. The composition can be formed into an article of manufacture prepared by molding the composition.

## Description

### BACKGROUND OF THE INVENTION

### 1. Field of the Invention

The present invention relates to synthetic resin compositions. More particularly, the present invention relates to synthetic resin compositions that can be molded into articles that generate less noise in use.

### 2. Description of the Related Art

In the fields of office automation ("OA") machines, automobile parts, and machinery, there has been progress in the use of resin for parts such as wheels, cams, and bearings by employing engineering plastics, such as polyacetal and the like. The use of these resins has greatly contributed to reducing the manufacturing costs of articles produced from them.

Unfortunately, in many cases, particularly where the molded parts are required to slide against other parts during use, noise is generated. Attempts have been made to reduce this high noise level by reducing the modulus of elasticity of the resin itself, for example, by applying grease to the resin. This solution, however, has been unsatisfactory. It has been found that the applied grease can, in use, spatter to the surrounding mechanisms, adversely affecting their physical properties. In addition, other problems may arise, such as an increase in torque, a reduction in strength, and a general lowering of efficiency.

Another cause of noise in engineering plastics is the "stick-slip phenomenon." When one surface is pressed against another surface with a normal force, n, and another force is applied that causes the one surface to slide across another surface, a drag force can be measured that is parallel to the surfaces and in a direction opposite to the applied force. This kinetic drag force, fₖ, is called a dynamic friction force or kinetic friction force and is related to the magnitude of the normal force by a dynamic friction coefficient, µD(vₛ). The dynamic friction coefficient, µD(vₛ), depends upon the sliding speed, V_{s,} and the surface characteristics of each of the materials in contact with each other. If µD is known for a particular vₛ, then the dynamic friction coefficient is determined by the following formula: fₖ = µD • n, where fₖ is the dynamic friction force and n is the normal force pressing the surfaces together. Thus, µD may be measured by determining the ratio fₖ/n.

Generally, the dynamic friction force and the coefficient of dynamic friction approach a constant value as the sliding speed, vₛ, approaches a high velocity, for example greater than 1 meter per second (m/s). Thus, at high velocities the coefficient of dynamic friction is independent of the sliding speed, vₛ. However, at low sliding speed, vₛ, the coefficient of dynamic friction, µD, is speed dependent. Typically, the dynamic friction force, fₖ, approaches a maximum as the sliding speed, vₛ, approaches 0. When the sliding speed, vₛ, is 0, then the two surfaces are at rest with each other, and the measured friction force is defined as a static friction force. The maximum static friction force, fₘₐₓ, occurs immediately prior to the onset of sliding. A large difference between the maximum static friction force, f_{max,} at vₛ = 0 and the dynamic static force at a high sliding speed, fₖ(vₛ = 4), results in stick-slip behavior. A large difference between fₘₐₓ and fₖ(vₛ = 4) results in stick-slip behavior that causes excessive noise in mechanical devices that use the material. Thus, it is desirable to have a material with little or no stick-slip behavior.

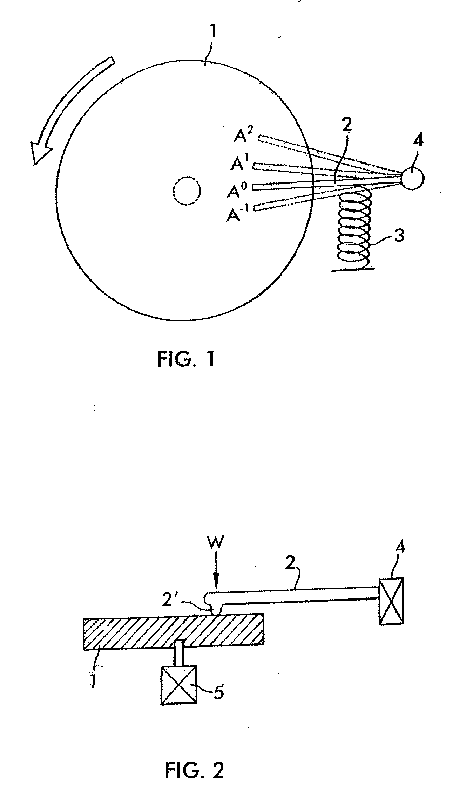

The stick-slip phenomenon may be understood by a perusal of Figures 1 and 2 which show a device used for placing a certain load W at a tip 2' of a stick 2. Stick 2 is held by a bearing 4 in a freely rotatable fashion on a disc 1 made of the testing material. A spring 3 is fixed at the intermediate part of stick 2. Disk 1 is rotated in the direction indicated by the arrow mark by means of a driving device 5.

When the rotation of disk 1 is started by driving device 5, stick 2 shifts from its static position A⁰ to A¹ where a balance is struck with spring 3, thereby achieving a stable state because of the difference between the static friction coefficient :S and the dynamic friction coefficient :_{D} on the contact surface between disk 1 and tip 2' of stick 2. Where the difference between the static friction coefficient :s and the dynamic friction coefficient :_{D} is large, a strain greater than the normal value is applied to spring 3, whereupon A¹ is exceeded and A² is reached. The stick is then displaced to position A⁻¹ and brought back to A⁰ by the restorative force of the spring.

If, in this state, disk 1 is caused to continue rotating, stick 2 will repeat the same action between A⁻¹, A⁰, and A². As a consequence, the stick will start vibrating, thereby generating noise.

Thus, the stick-slip phenomenon is created by the difference between the static friction coefficient :s and the dynamic friction coefficient :_{D}. When a resin composition having a large difference is molded into a machine element, the stick slip phenomenon is manifested as noise in a machine device using the machine element.

Thus, there is a need for a resin composition that can be molded into useful parts that inherently will produce little or no noise in use.

### SUMMARY OF THE INVENTION

The present invention relates to a synthetic resin composition for preventing noise in finished parts molded from the composition. The materials have a small difference between their static friction coefficient, :ₛ, and their dynamic friction coefficient, :_{D}. This substantially reduces the "stick-slip phenomenon", which is the source of noise in engineering plastics, such as polyacetal and the like.

More particularly, the present invention is directed to a low noise composition comprising fine particles of RBC or CRBC uniformly dispersed in a synthetic resin.

In an alternative embodiment, the present invention is directed to an article of manufacture comprising a molded low noise synthetic resin composition comprising fine particles of RBC or CRBC uniformly dispersed in a synthetic resin.

Other features and advantages of the present invention will become apparent from the following description of the preferred embodiments.

### BRIEF DESCRIPTION OF THE DRAWINGS

Figure 1 is an oblique view of the equipment for measuring the stick-slip phenomenon.

Figure 2 is a cross section of the equipment for measuring the stick-slip phenomenon.

Figure 3 is a graph depicting the friction characteristics of a polyacetal molded product ("RBC/POM").

Figure 4 is a graph depicting the friction characteristics of a polyamide (nylon 66) molded product ("RBC/PA66").

Figure 5 is a graph depicting the friction characteristics of a polyamide (nylon 66) molded product containing glass fibers ("RBC/GF23PA66").

Figure 6 is a graph depicting the friction characteristics of a polyamide (nylon 11) molded product ("CRBC/PA11").

Figure 7 is a graph depicting the friction characteristics of a polybutylene terephthalate molded product ("CRBC/PBT").

Figure 8 is a graph depicting the friction characteristics of a polypropylene molded product ("CRBC/PP").

### DESCRIPTION OF THE PREFERRED EMBODIMENTS

In accordance with the present invention, fine particles of a rice bran ceramic ("RBC") or a carbonized rice bran ceramic ("CRBC") are uniformly dispersed in a synthetic resin to provide a low noise composition. RBC and CRBC are advantageous because they possess the following qualities:
1. they are very hard;
2. when they are made into grains, their shape is irregular;
3. their expansion coefficient is extremely small;
4. they are electrically conductive;
5. their specific gravity is low and they are light and porous;
6. their friction coefficient is extremely small; and
7. their resistance to friction is superior.
   Moreover, because the materials are rice bran, there is no adverse effect upon the earth's environment and they serve to preserve natural resources.

To produce RBC or CRBC, rice bran is preferably used as a starting material because of its low cost. Large quantities are produced as a by-product of other processes, e.g., about 900,000 tons per year in Japan alone and 33,000,000 tons per year throughout the world.

RBC is a carbon material made, for example, by mixing and kneading a de-fatted rice bran (de-fatted bran obtained from rice) with a thermally hardening or thermosetting resin, molding a product from the mixture, drying it, and then firing the dried molded product in an inert gas atmosphere, e.g., sintering. See Kazuo Hokkirigawa, Kino Zairyo "Functional Materials", Vol. 17, No. 5, pp. 24-28 (May 1997).

Preferably, the thermosetting resin that is mixed with the de-fatted rice bran should be any resin that is heat hardened or cured by heating. Preferred resins include, but are not limited to, phenolics, diaryl phthalate resins, unsaturated polyester resins, epoxies, polyimides, triazine resins and the like. Phenolic resins, e.g., resols, are especially preferred.

The mixing ratio of de-fatted rice bran to the thermosetting resin should be in the range from about 50 to 90:50 to 10 (about 50:50 to about 90:10) by weight. A ratio of about 75:25 is especially preferred.

CRBC is a carbon material also obtained from defatted rice bran and a thermosetting resin, bus is an improvement over RBC. To prepare a CRBC, for example, the de-fatted rice bran and the thermosetting resin are mixed, kneaded, and then first fired in an inert gas atmosphere at a temperature in the range of about 700°C to 1000°C, e.g., sintered. Ordinarily, the mixture is fired in a rotary kiln for a period of about 40 to about 120 minutes. The resulting material is then pulverized (crushed) into to less than about 100 mesh to form carbonized powder.

The carbonized powder is then mixed with a thermosetting resin, which may be, but is not necessarily, the same as that employed with the de-fatted rice bran, and kneaded. This product is then molded under pressure in the range of about 20 Mpa to 30 Mpa. The molded product is once again heat treated in an inert gas atmosphere at a temperature in the range from about 100° to 1100°C, e.g., sintered, thereby obtaining a black resin or porous CRBC ceramic.

According to the present invention, fine particles of RBC or CRBC are mixed with a synthetic resin to form a synthetic resin composite having unique and useful friction characteristics. Preferably, the RBC or CRBC constitutes about 30-70% by weight of the entire synthetic resin composite. Preferably, the weight ratio of the RBC or CRBC particles to the synthetic resin is about 30 to 90:70 to 10 (about 30:70 to about 90:10).

In a preferred embodiment, the RBC or CRBC particles are uniformly dispersed in a synthetic resin. The fine particles are uniformly dispersed by mixing them with the synthetic resin at or near the resin's fusion point, followed by kneading. As a result of the uniform dispersal, and especially when the weight ratio of the particles to the synthetic resin is about 30 to 90:70 to 10 (about 30:70 to about 90:10), the difference between the static friction coefficient :S and the dynamic friction coefficient :_{D} on the surface of an article molded from the composition is reduced.

In a preferred embodiment, the RBC or CRBC should have a mean particle size of about 300 :m or less, preferably a mean particle size of about 20-150 :m. It has been found that a synthetic resin composite of the present invention including fine particles of RBC or CRBC, results in a composition that has surface characteristics that make the composition particularly suitable for use in low noise applications.

Preferably, the synthetic resins that are mixed with the RBC or CRBC are thermoplastic resins. Examples of these resins include, but are not limited to, polyacetal, polyamide, polyester, polyolefins, and the like. POM (polyacetal, i.e., polyoxymethylene), nylon 66 (polyhexamethylene adipamide), nylon 6 (polycapramide), nylon 11 (polyundecanamide), nylon 12, polybutylene terephthalate, polyethylene teraphthalate, polypropylene, polyethylene, and other thermoplastic resins are preferred. Among these, POM, nylon 66, nylon 11, polybutylene terephthalate, polypropylene, and the like are more preferred. These thermoplastic resins can be used either alone or in combination.

The thermoplastic resin or resins can be used in combination with one or more thermosetting resins. As stated above, the thermosetting resins that can be used in the present invention include, but are not limited to, phenolics, diaryl phthalate resins, unsaturated polyester resins, epoxies, polyimides, triazine resins system, and the like.

In a preferred embodiment, the RBC or CRBC should constitute about 30-70% by weight of the synthetic composition. For example, the weight ratio of the fine particles of RBC or CRBC to the synthetic resin should be about 30 to 90:70 to 10. It has been found that if the synthetic resin exceeds about 70 weight per cent, the difference between the static friction coefficient :ₛ and the dynamic friction coefficient :D becomes too large. On the other hand, if it is less than about 10 weight per cent, molding becomes difficult.

The low noise synthetic resin composition of the present invention can be molded into any given shape by any of the known methods. Preferably, the molded compositions are used in the manufacture of machine elements, such as, for example, screws, bearings, axial relays, cam mechanisms, cylinders and pistons, wheels, belts and pulleys, chains and sprockets, valves and tubes, and the like.

Preferably, molding is carried out by extrusion molding, injection molding or by any of the known methods. Preferably, the temperature of the mold should be relatively low, preferably in the range between the glass transition point of the synthetic resin and its fusion point. It is also preferred that the mold be cooled gradually rather than suddenly, which will normally provide a molded product having superior surface conditions.

In a preferred embodiment, the strength of the molded product can be increased by adding inorganic fibers, such as glass fiber, rock wool, carbon fibers, and the like; synthetic fibers, such as polyester, rayon, polyvinyl alcohol, polyamide, polyolefin, acrylic, and the like; or natural pulp fibers, such as wood pulp, Manila hemp, and the like.

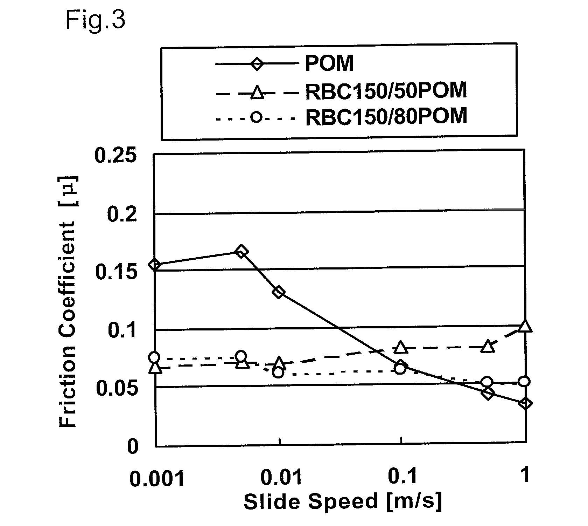

The advantages and the important features of the present invention will become more apparent from Examples 1-9 set forth below and Figures 3-8.

### Examples

Examples 1-9 include materials made with and without RBC or CRBC as an additive. The friction characteristics of each of the examples was then measured, and the examples without RBC or CRBC as additives were compared to examples with RBC or CRBC as an additive.

Figures 3-8 each show the dynamic friction coefficient, µ_{D}versus the slide speed, vₛ, for Examples 1-9 (materials with and without RBC or CRBC particulate additives). Measurements were made of the dynamic coefficient of friction, µ_{D}; over a range of sliding speeds, vₛ, from 0.001 m/s to 1.0 m/s for various materials, e.g., in the range of 0.001-.01 m/s and 0.1 ―1 m/s. A normal force, n, of 0.49 Newtons (N) was applied, pressing a SUJ ball with a diameter of 2 millimeters (mm) into contact with the surface of a specimen.

A reciprocating friction test apparatus was used to measure the dynamic friction force for sliding speeds in the range from 0.001 m/s to 0.01 m/s, and a rotary friction test apparatus was used to measure the dynamic friction force, fk, at higher velocities from 0.1 m/s to 1 m/s. In the case of the reciprocating friction test, the reciprocating arm repeated 1000 strokes and the stroke distance was 5 mm, which was a distance sufficient to reach a steady measurement of the dynamic friction force, fₖ, which was used to calculate µ_{D}.

As shown below, the specimens were prepared by injecting heated materials into a metal mould to produce a circular specimen with a diameter of 50 mm and a thickness of 3 mm. The injection temperature varied, depending on the compositions of the materials used in each of the examples, as noted below. An ester lubricating oil was applied to surface of the material prior to each test.

Figures 3-8 demonstrate that the materials without RBC or CRBC particulate additives show stick-slip behavior, and the materials with RBC or CRBC particulate additives show little or no stick-slip behavior. Instead, materials with RBC or CRBC particulate additives show a nearly constant dynamic friction coefficient, :_{D}, over the full range of slide speeds tested, even at sliding speeds as low as 0.001 m/s. Thus, the specific examples described below indicate that materials with RBC or CRBC particulate additives reduce stick-slip behavior, avoiding the generation of noise.

### Example 1

### Preparation of RBC Fine Particles

De-fatted rice bran in the amount of 75 kilograms and 25 kilograms of phenolic resin (resol) were mixed and kneaded while being heated at a temperature of 50-60°C. A plastic mixture of uniform quality, i.e., a homogenous mixture, was obtained.

The mixture was fired in a rotary kiln for 120 minutes at 900°C in a nitrogen atmosphere. The resulting carbonized product was sifted through a 170-mesh sieve. Fine RBC particles having a mean particle size in the range of 145 to 155 :m were obtained.

### Preparation of Mixture of RBC Fine Particles and Synthetic Resin

RBC fine particles in the amount of 500 grams (having a mean particle size of 150 :m) and 500 grams of polyacetal resin (POM) pellets were mixed and kneaded, while being heated at a temperature of 180-230°C. A plastic mixture of uniform quality was obtained.

### Molding of Test Pieces

The above resin composition, heated at a temperature of 190°C, was injected into a metal mold (in the range between 115°C and 135°C) to produce test pieces 3 millimeters thick and 50 millimeters in diameter.

### Measurement of Friction Characteristics

The results are shown in Figure 3.

### Example 2

### Preparation of Fine RBC Particles

De-fatted rice bran in the amount of 75 kilograms and 25 kilograms of a liquid phenolic resin (resol) were mixed and kneaded while being heated at 50-60°C. A plastic mixture having uniform quality was obtained.

The mixture was fired at 1,000°C for 120 minutes in a rotary kiln in a nitrogen atmosphere. The resulting carbonized product was sifted through a 170-mesh sieve yielding RBC particles having a mean particle size in the range of from 145 to 155 :m.

### Preparation of Mixture of Fine RBC Particles and Synthetic Resin

RBC particles in the amount of 200 grams (whose mean particle diameter was 150 :m) and 800 grams of polyacetal resin (POM) pellets were mixed and kneaded while being heated at 180-200°C. A plastic mixture of uniform quality was obtained.

### Preparation of Test Pieces

The above resin composition, heated at a temperature of 190°C, was injected into a metal mold (115 to 135°C) to produce test pieces 3 millimeters thick and 50 millimeters in diameter.

### Measurement of Friction Characteristics

The results are shown in Figure 3.

### Example 3

### Preparation of Fine RBC Particles

De-fatted rice bran in the amount of 75 kilograms and 25 kilograms of a liquid phenolic resin (resol) were mixed and kneaded while being heated at 50-60°C. A plastic mixture of uniform quality was obtained.

The mixture was fired at 900°C for 120 minutes in a rotary kiln in a nitrogen atmosphere. The resulting carbonized product was pulverized and sifted through an 800-mesh sieve yielding RBC particles having a mean particle size of 30 :m.

### Preparation of Mixture of Fine RBC Particles and Synthetic Resin

The above RBC particles in the amount of 500 grams and 500 grams of polyamide (nylon 66) pellets were mixed and kneaded while being heated at 260-280°C. A plastic mixture of uniform quality was obtained.

### Molding of Test Pieces

The above resin composition, heated at a temperature of 270°C, was injected into a metal mold (130-150°C) to produce test pieces 3 millimeters thick and 50 millimeters in diameter.

### Measurement of Friction Characteristics

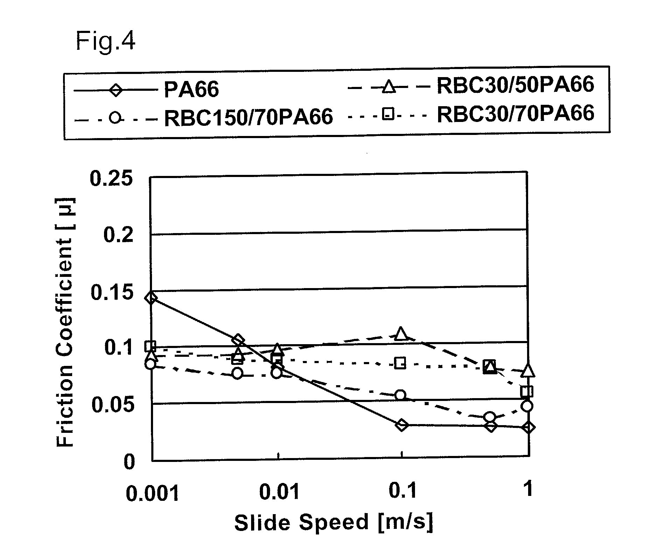

The results are shown in Figure 4.

### Example 4

### Preparation of a Mixture of Fine RBC Particles and Synthetic Resin

RBC particles in the amount of 300 grams obtained in Example 3 having a mean particle size of about 150:m and 700 grams of polyamide (nylon 66) pellets were mixed and kneaded while being heated at 260-280°C.

### Molding of Test Pieces

The above resin composition, heated at 270°C, was injected into a metal mold (110-130°C) to produce test pieces 3 millimeters thick and 50 millimeters in diameter.

### Measurement of Friction Characteristics

The results are shown in Figure 4.

### Example 5

### Preparation of Mixture of RBC Fine Particles and Synthetic Resin

RBC particles from Example 1 in the amount of 300 grams having a mean particle size of 150 :m, and 700 grams of polyamide (nylon 66) pellets were mixed and kneaded while being heated at 260-280°C. A plastic mixture of uniform quality was obtained.

### Molding of Test Pieces

The above resin composition, heated at a temperature of 270°C, was injected into a metal mold (130-140°C) to produce a test piece 3 millimeters thick and 50 millimeters in diameter.

### Measurement of Friction Characteristics

The results are shown in Figure 4.

### Example 6

### Preparation of Mixture of Fine RBC Particles and Synthetic Resin

RBC particles from Example 2 in the amount of 300 grams having a mean particle size of 150 :m, and 700 grams of polyamide (nylon 66) pellets were mixed and kneaded while being heated at 260-280°C. As a result, a plastic mixture of uniform quality was obtained.

Next, 100 grams of glass fiber were mixed in. The mixing was continued for a sufficient time until uniformity was obtained.

### Molding of Test Pieces

The above resin composition, heated at a temperature of 270°C, was injected into a metal mold (130-140°C) to produce test pieces 3 millimeters thick and 50 millimeters in diameter.

### Measurement of Friction Characteristics

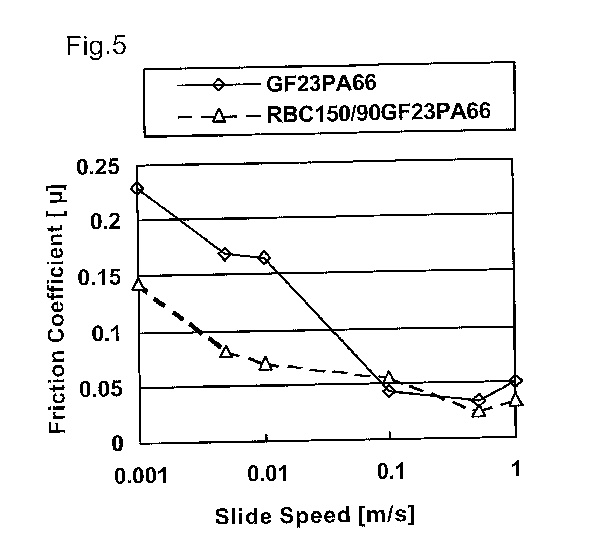

The results are shown in Figure 5.

### Example 7

### Preparation of Fine CRBC Particles

De-fatted rice bran in the amount of 75 kilograms and 25 kilograms of liquid phenolic resin (resol) were mixed and kneaded at 50-60°C. A plastic mixture of uniform quality was obtained.

The mixture was fired at 900°C for 100 minutes in a rotary kiln in a nitrogen atmosphere. The resulting carbonized product was crushed with a pulverizer and sifted through a 100-mesh sieve yielding RBC particles having a mean particle size in the range of 240 to 260 :m.

RBC particles in the amount of 75 kilograms and 50 kilograms of a solid phenolic resin (resol) were mixed and kneaded while being heated at 50-60°C. A plastic mixture of uniform quality was obtained.

Next, the plastic mixture was molded under a pressure of 22 Mpa into a globular shape whose diameter was approximately 1 centimeter. The temperature of the metal mold was 150°C.

The molded product was taken out of the metal mold, and the temperature was elevated at a rate of 2° C per minute, until 500°C was reached. The temperature was held for 60 minutes at 500°C, and then firing was carried out at 900°C for approximately 120 minutes.

Next, the temperature was lowered at a cooling rate of 2 to 3°C per minute until 500°C was reached. Below 500°C, it was left to cool naturally.

The resulting CRBC product was crushed with a pulverizer and, by using a 170-mesh sieve, CRBC particles having a mean particle size of from 145 to 155 :m were obtained.

### Preparation of Mixture of Fine CRBC Particles and Synthetic Resin

CRBC particles in the amount of 600 grams and 400 grams of polyamide (nylon 11) pellets were mixed and kneaded while being heated at 190-200°C. A plastic mixture of uniform quality was obtained.

### Molding of Test Pieces

The above resin composition, heated at a temperature of 200°C, was injected into a metal mold (90-110°C) to produce test pieces three millimeters thick and 50 millimeters in diameter.

### Measurement of the Friction Characteristics

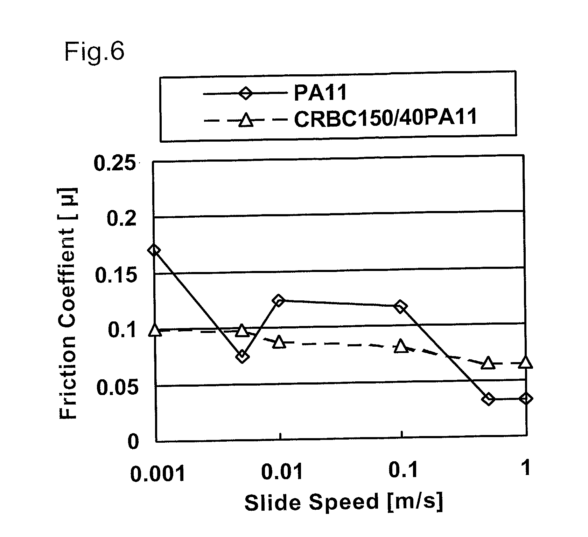

The results are shown in Figure 6.

### Example 8

### Preparation of Fine CRBC Particles

De-fatted rice bran in the amount of 75 kilograms and 25 kilograms of a liquid phenolic resin (resol) were mixed and kneaded while being heated at 50-60°C. A plastic mixture of uniform quality was obtained.

The mixture was fired at 950°C in a rotary kiln for 120 minutes in a nitrogen atmosphere. The resulting carbonized product was pulverized and then sifted through a 100-mesh sieve to yield RBC particles having a mean particle size of from about 240 to 260 :m.

RBC particles in the amount of 75 kilograms and 35 kilograms of a solid phenolic resin (resol) were mixed and kneaded while being heated at 50-60°C. A plastic mixture of uniform quality was obtained.

Next, the plastic product was molded under a pressure of 22 Mpa into a globular shape whose diameter was approximately 1 centimeter. The temperature of the metal mold was 150°C.

The molded product was taken out of the metal mold. The temperature was then raised in a nitrogen atmosphere at the rate of 3°C per minute until 500°C was achieved. It was held at 500°C for 30 minutes; and then fired for approximately 120 minutes at 1000°C.

Next, the temperature was lowered at a cooling rate of 2 to 3°C per minute until 500°C was reached, then left to cool naturally.

The resulting CRBC product was pulverized and subjected to a 170-mesh sieve yielding CRBC particles having a mean particle size of 145 to 155 :m.

### Preparation of Mixture of Fine CRBC Particles and Synthetic Resin

CRBC particles in the amount of 600 grams, having a mean particle size of 150 :m, and 400 grams of polybutylene terephthalate powder were mixed and kneaded while being heated at 240-260°C. A plastic mixture of uniform quality was obtained.

### Molding of Test Pieces

The above resin composition, heated at a temperature of 260°C, was injected into a metal mold (80-100°C) to produce test pieces 3 millimeters thick and 50 millimeters in diameter.

### Measurement of Friction Characteristics

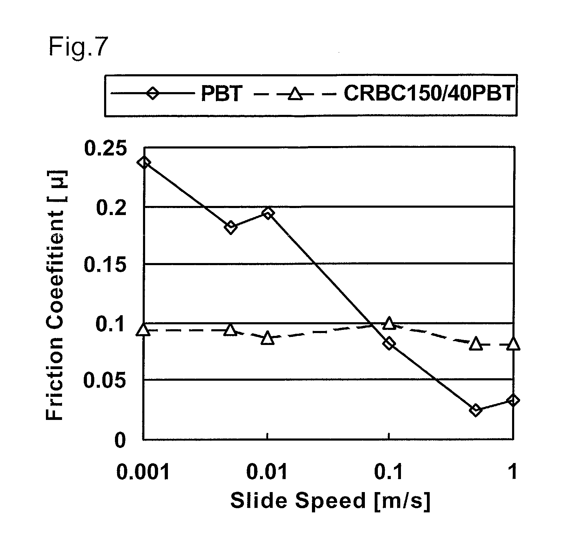

The results are shown in Figure 7.

### Example 9

### Preparation of Mixture of Fine CRBC Particles and Synthetic Resin

CRBC particles in the amount of 700 grams from Example 8 (having a mean particle size of 150 :m) and 300 grams of polypropylene particles were mixed and kneaded while being heated at 190-210°C. A plastic mixture of uniform quality was obtained.

### Molding of Test Pieces

The above resin composition, heated at a temperature of 220°C, was injected into a metal mold (80-90°C) to produce test pieces 5 millimeters thick and 50 millimeters in diameter.

### Measurement of Friction Characteristics

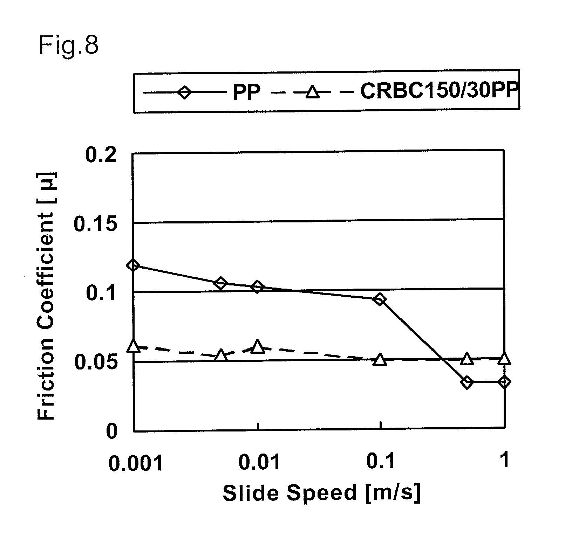

The results are shown in Figure 8.

The results from Figures 3 - 8 clearly show that the synthetic resin composition that contains fine particles of RBC or CRBC of the present invention is a material in which the difference between the static friction coefficient :ₛ and dynamic friction coefficient :_{D} is small. As a result, the stick-slip phenomenon is significantly reduced, thereby allowing the composition of the present invention to have a wide range of uses for various kinds of machinery elements.

Although the present invention has been described in relation to particular embodiments thereof, many other variations and modifications and other uses will become apparent to those skilled in the art. The present invention therefore is not limited by the specific disclosure herein.

## Claims

1. An article of manufacture, comprising:
a molded low noise resin composition including particles of at least one of RBC and CRBC dispersed in a resin.

2. The article of manufacture of claim 1, wherein the particles are uniformly dispersed in the resin.

3. The article of manufacture of claim 1, wherein the composition includes about 30-70% by weight of the at least one of RBC and CRBC.

4. The article of manufacture of claim 1, wherein the weight ratio of the fine particles of the at least one of RBC and CRBC to the resin is about 30 to 90:70 to 10.

5. The article of manufacture of claim 1, wherein the particles include a powder.

6. The article of manufacture of claim 1, wherein the resin is a thermoplastic resin selected from the group consisting of at least one of: polyacetal, polyamide, polyester, and polyolefins.

7. The article of manufacture of claim 6, wherein the thermoplastic resin is selected from the group consisting of at least one of: polyacetal, nylon 66, nylon 6, nylon 11, nylon 12, polybutylene terephthalate, polyethylene terephthalate, polypropylene, and polyethylene.

8. The article of manufacture of claim 1, wherein the mean particle size of the particles of the at least one of RBC and CRBC is about 300 µm or less.

9. The article of manufacture of claim 7, wherein the mean particle size of the particles of the at least one of RBC and CRBC is about 20 to 150 µm.

10. The article of manufacture of claim 1, further comprising fibers selected from the group consisting of at least one of: inorganic fibers, synthetic fibers, and natural pulp fibers.

11. The article of manufacture of claim 1, wherein the article is molded into a form selected from the group consisting of at least one of: screws, axial relays, cam mechanisms, cylinders, pistons, wheels, friction wheels, belts, pulleys, chains, sprockets, valves, and tubes.

12. An article of manufacture, comprising:
a body having a low friction contact surface, at least part of the body being formed from a composite material including,
fine particles of at least one of RBC and CRBC; and
a resin material, wherein the fine particles are dispersed within the resin material.

13. The article of manufacture of claim 12, wherein the fine particles are uniformly dispersed in the resin material.

14. The article of manufacture of claim 12, wherein the body includes at least one of a screw, an axial relay, a cam mechanism, a cylinder, a piston, a wheel, a friction wheel, a belt, a pulley, a chain, a sprocket, a valve, and a tube.

15. The article of manufacture of claim 12, wherein the composite material includes about 30-70% by weight of the at least one of RBC and CRBC.

16. The article of manufacture of claim 12, wherein the weight ratio of the fine particles to the resin material is about 30 to 90:70 to 10.

17. The article of manufacture of claim 12, wherein the resin material is a thermoplastic resin.

18. The article of manufacture of claim 17, wherein the resin is selected from the group consisting of at least one of: polyacetal, polyamide, polyester, polyolefins.

19. The article of manufacture of claim 18, wherein the resin is selected from the group consisting of at least one of: polyacetal, nylon 66, nylon 6, nylon 11, nylon 12, polybutylene terephthalate, polyethylene terephthalate, polypropylene, and polyethylene.

20. The article of manufacture of claim 12, wherein the mean particle size of the fine particles is about 300 :m or less.

21. The article of manufacture of claim 20, wherein the mean particle size of the fine particles is about 20 to 150 µm.

22. The article of manufacture of claim 12, further comprising fibers selected from the group consisting of at least one of: inorganic fibers, synthetic fibers, and natural pulp fibers.

23. The article of manufacture of claim 22, wherein the synthetic fibers are selected from the group consisting of at least one of: polyester, rayon, polyvinyl alcohol, polyamide, polyolefin and acrylic.

24. The article of manufacture of claim 22, wherein the natural pulp fibers are selected from the group consisting of: wood pulp and Manila hemp.

25. The article of manufacture of claim 17, wherein the resin material includes a thermosetting resin.

26. The article of manufacture of claim 25, wherein the thermosetting resin is selected from the group consisting of at least one of: phenolics, diaryl phthalate resins, unsaturated polyester resins, epoxies, polyimides, and a triazine resins system.

27. An apparatus, comprising:
a component, wherein the component has a low noise contact surface, and at least part of the component is formed of a composite including a resin and about 30-70% by weight of at least one of RBC and CRBC, wherein the at least one of RBC and CRBC is uniformly dispersed in the resin.

28. The apparatus of claim 27, wherein the mean particle size of the at least one of RBC and CRBC is about 300:m or less.

29. The apparatus of claim 28, wherein the mean particle size is about 20 to 150:m.

30. The apparatus of claim 27, wherein the component is at least one of a screw, an axial relay, a cam mechanism, a cylinder, a piston, a wheel, a friction wheel, a belt, a pulley, a chain, a sprocket, a valve, and a tube.

31. A method for manufacturing low noise machinery parts, comprising the steps of:
a) providing fine particles of at least one of RBC and CRBC;
b) providing at least one resin material;
c) mixing the fine particles with the at least one resin material to obtain a mixture; and
d) forming at least one part of an article from the mixture, wherein the at least part of the article includes a composite material having the fine particles dispersed within the resin material.

32. The method of claim 31, wherein the mixture is heated before forming the article.

33. The method of claim 31, wherein the article is formed by molding.

34. The method of claim 31, wherein the article is formed by one of extrusion molding and injection molding.

35. The method of claim 31, wherein the molding takes place at a temperature between the glass transition temperature and the melting temperature of the at least one resin material.

36. The method of claim 31, further comprising the step of: cooling the article gradually.

37. The method of claim 31, wherein the fine particles are uniformly dispersed within the at least one resin material.

38. The method of claim 31, wherein the article is one of a screw, an axial relay, a cam mechanism, a cylinder, a piston, a wheel, a friction wheel, a belt, a pulley, a chain, a sprocket, a valve, and a tube.

39. The method of claim 31, wherein the weight ratio of the fine particles to the resin material is about 30 to 90:70 to 10.

40. The method of claim 31, wherein the resin material is a thermoplastic resin.

41. The method of claim 40, wherein the resin is selected from the group consisting of at least one of: polyacetal, nylon 66, nylon 6, nylon 11, nylon 12, polybutylene terephthalate, polyethylene terephthalate, polypropylene, and polyethylene.

42. The method of claim 31, wherein the mean particle size of the fine particles is about 300 :m or less.

43. The method of claim 42, wherein the mean particle size of the fine particles is about 20 to 150 :m.

44. The method of claim 31, further comprising the step of: adding at least fiber selected from the group consisting of at least one of: inorganic fibers, synthetic fibers, and natural pulp fibers to the mixture of the fine particles and the resin material.
